# EUROPÄISCHE PATENTANMELDUNG

(11) **EP 2 824 341 A1**
(43) Veröffentlichungstag der Anmeldung: **14.01.2015**
(21) Anmeldenummer: 14175492.9
(22) Anmeldetag: 03.07.2014
(51) Int. Cl.: F16C 33/52, F16C 33/54

(54) **Verfahren zur Herstellung eines Wälzlagerkäfigs**

(30) Priorität: 03.07.2013 DE 102013212992
(71) Anmelder: Aktiebolaget SKF, 41 550 Göteborg (SE)
(72) Erfinder: Menig, Fred, 97717 Sulzthal (DE)
(74) Vertreter: Kuhstrebe, Jochen

(57) **Zusammenfassung**

Die Erfindung betrifft ein Verfahren zur Herstellung eines Wälzlagerkäfigs zur Führung und/oder Halterung von Wälzkörpern des Wälzlagers, wobei der Wälzlagerkäfig mindestens einen Ring (3) aufweist. Um in kostengünstiger Weise insbesondere Käfige von Großlagern herstellen zu können, sieht die Erfindung vor, dass das Verfahren die Herstellung des Rings mit den folgenden Schritten umfasst: a) Ablängen mindestens zweier Teile (4, 5, 6, 7) eines geraden profilierten Metallmaterials auf ein definiertes Maß; b) Biegen der Teile, so dass sie einen Bogenabschnitt des Rings bilden; c) stoffschlüssiges Verbinden der Teile, so dass diese den Ring bilden.

## Beschreibung

Die Erfindung betrifft ein Verfahren zur Herstellung eines Wälzlagerkäfigs zur Führung und/oder Halterung von Wälzkörpern des Wälzlagers, wobei der Wälzlagerkäfig mindestens einen Ring aufweist.

In Groß-Wälzlagern werden die Käfige häufig als Käfige mit Stahlringen ausgeführt. Diese Ringe können im Falle der Ausbildung als Bolzenkäfig pro Wälzkörper eine Bohrung besitzen; in diese wird ein Bolzen eingeschraubt oder eingepresst, wobei auf dem Bolzen ein Wälzkörper mit einer zentrischen Bohrung aufgeschoben wird. Die Bolzen werden mit einem weiteren Ring (Gegenring) gesichert.

Die genannten Käfige kommen insbesondere für die Lagerbauarten Kegelrollenlager und Zylinderrollenlager sowie Kombilager zum Einsatz, gelegentlich auch im Falle von Pendelrollenlagern und Axialkegelrollenlagern.

Bolzenkäfige der genannten Art finden meist Anwendung bei sehr großen Wälzlagern bzw. bei sehr schweren Wälzkörpern.

Die Geometrie der Ringe, die für den Käfig benötigt werden, zeichnet sich durch große Durchmesser aus, wobei eine geringe Breite bzw. eine geringe Wandstärke vorliegen. Zur Herstellung besagter Ringe für die Käfige hat sich ein Verfahren bewährt, bei dem der Käfigring aus einem gewalzten, geschmiedet oder geschnittenen Material besteht; das Ausschneiden kann mit Wasserstrahl, Laser oder Brenner erfolgen. Zumeist werden gewalzte oder geschmiedete Rohlinge als Ringmaterial eingesetzt.

Die Herstellung der Ringe für die Käfige ist daher sehr aufwändig und hat entsprechend hohe Kosten zur Folge, was sich unter anderem durch die benötigten Werkzeuge und erforderlichen Maschinenlaufzeiten ergibt. Das gilt insbesondere dann, wenn die Grundabmessungen zwischen Außendurchmesser, Breite und Wandstärke des Rings vorgegeben werden, die zu problematischen Walz- bzw. Schmiedebedingungen führen.

Angestrebt wird dabei, dass mehrere Käfigscheiben aus einem Rohling gefertigt werden, was allerdings mit Blick auf die benötigten Werkzeuge und die Fertigung kostenintensiv ist. Besonders schwierig ist es, wenn Paare von Käfigringen hergestellt werden müssen; hier ist die Ausschussquote besonders hoch und die Fertigung entsprechend teuer.

Der Erfindung liegt die Aufgabe zugrunde, ein Verfahren für die Herstellung eines Wälzlagerkäfigs, insbesondere der Ringe eines Wälzlagerkäfigs, bereitzustellen, mit dem es möglich ist, in kostengünstigerer Weise als bislang insbesondere die Käfige von Großlagern präzise herstellen zu können.

Die Lösung dieser Aufgabe durch die Erfindung ist dadurch gekennzeichnet, dass das Verfahren die Herstellung des Rings mit den folgenden Schritten umfasst:
a) Ablängen mindestens zweier Teile eines geraden profilierten Metallmaterials auf ein definiertes Maß;
b) Biegen der Teile, so dass sie jeweils einen Bogenabschnitt des Rings bilden;
c) stoffschlüssiges Verbinden der Teile, so dass diese den Ring bilden.

Im Anschluss an die Herstellung mindestens eines solchen Rings, vorzugsweise zweier solcher Ringe, wird mit diesen der Wälzlagerkäfig produziert, was in bekannter Weise erfolgt, beispielsweise durch Verbinden mit Stegen zu einem Taschenkäfig oder durch Montage von Bolzen zu einem Bolzenkäfig.

Als gerades profiliertes Metallmaterial wird bevorzugt ein Flachstahl verwendet. Es ist aber auch mit Vorteil möglich, dass als gerades profiliertes Metallmaterial ein U-Profil verwendet wird. Hierdurch lässt sich bei relativ hoher Festigkeit des entstehenden Käfigs eine leichte Bauweise verwirklichen.

Das Biegen gemäß obigem Schritt b) kann erfolgen, nachdem die Teile erwärmt worden sind; d. h. in diesem Falle sind die Teile zum Zeitpunkt des Biegens erhitzt. Es ist aber auch möglich, dass das Biegen in kaltem Zustand der Teile erfolgt.

Das stoffschlüssige Verbinden der Teile erfolgt bevorzugt durch Schweißen. Dabei ist gemäß einer speziellen Ausgestaltung der Erfindung vorgesehen, dass das Schweißen ein Widerstandsstumpfschweißen ist.

Bevorzugt werden mindestens vier Teile zu einem Ring zusammengesetzt; besonders bevorzugt sind es mindestens sechs Teile.

Der Ring wird dabei bevorzugt mit einem Außendurchmesser von mindestens 1.000 mm hergestellt; besonders bevorzugt sind es mindestens 2.500 mm.

Gemäß einer bevorzugten Ausführungsform der Erfindung werden zwei Ringe mit einer Anzahl Bolzen zu einem Bolzenkäfig verbunden. Die Ringe können in diesem Falle im Radialschnitt U-förmig ausgebildet sein; die offene Seite des "U" weist in diesem Falle bevorzugt seitlich nach außen. Die Bolzen können mit den Ringen über eine stoffschlüssige Verbindung, insbesondere über eine Schweißverbindung, verbunden sein; alternativ kommt auch eine Schraub- oder Nietverbildung zum Einsatz.

Demgemäß sieht der Erfindungsvorschlag vor, dass Profilstäbe oder Flachstahl-Stäbe auf Länge gebracht und dann kalt oder warm gebogen werden. Die einzelnen Teile werden kann vorzugsweise stumpf geschweißt, wobei auch ein Abbrennstumpfschweißen möglich ist.

Durch diese Vorgehensweise können ringförmige Teile sehr schnell und effizient und somit kostengünstig hergestellt werden. Der Werkzeugbedarf, die benötigte Energie und die Rüstkosten können reduziert werden. Eine auftragsgenaue Fertigung ist möglich.

Somit werden insgesamt eine Reduzierung der Herstellkosten und eine Reduzierung von Material möglich. Ferner werden Verbrauchsgüter wie Strom und Werkzeugkosten reduziert. Somit lässt sich die Effizienz steigern und die Rüstkosten reduzieren. Damit ergeben sich bei gegebenem Maschinenpark Fertigungskapazitäten für andere Produkte.

Die Käfige lassen sich somit verbessern, was deren Genauigkeit bei gegebenem Fertigungseinsatz anbelangt.

Die Lagerbauteile können stets der benötigten Lagerstückzahl angepasst werden.

Der erfindungsgemäße Vorschlag eignet sich insbesondere für die Herstellung großer, dünnwandiger und schmaler Bauteile, die bei einem Wälzlager benötigt werden, wobei insbesondere an Käfigscheiben oder Zwischenringe für das Wälzlager gedacht ist.

In der Zeichnung sind Ausführungsbeispiele der Erfindung dargestellt. Es zeigen:
- Fig. 1: im Radialschnitt einen Wälzlagerkäfig mit Wälzkörpern,
- Fig. 2: in der Draufsicht ein abgelängtes gerades Metallmaterial vor der Umformung,
- Fig. 3: in der Draufsicht das abgelängte Metallmaterial gemäß Fig. 2 nach der Umformung,
- Fig. 4: die Draufsicht auf den fertiggestellten Ring eines Wälzlagerkäfigs gemäß der Erfindung und
- Fig. 5: im Radialschnitt einen Teil eines Wälzlagers mit einem erfindungsgemäßen Käfig gemäß einer alternativen Ausgestaltung, wobei der Käfig als Bolzenkäfig ausgebildet ist.

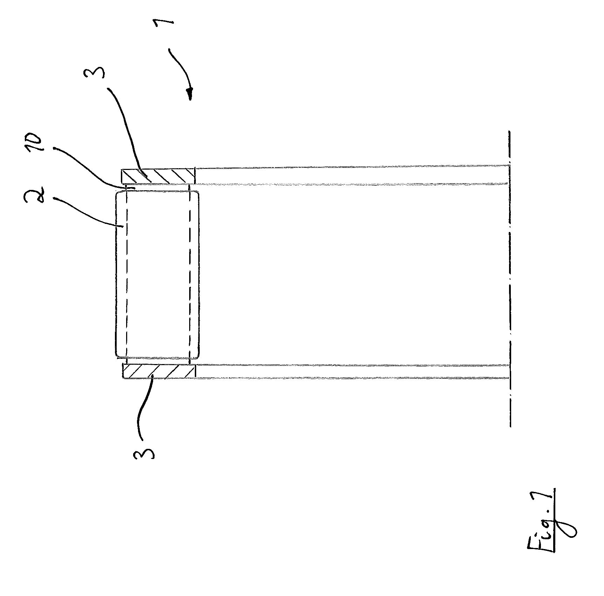

In Fig. 1 ist ein Wälzlagerkäfig 1 skizziert, dessen Aufbau bekannt ist. Der Wälzlagerkäfig 1 dient zum Halten bzw. Führen von Wälzkörpern 2. Hierzu sind bei der Ausführungsform nach Fig. 1 zwei Ringe 3 axial beabstandet angeordnet. Die Ringe 3 sind über Stege 10 miteinander verbunden, so dass Aufnahmetaschen für die Wälzkörper 2 entstehen. Der dargestellte Taschenkäfig ist nur eine mögliche Ausführungsform, bei der die Erfindung zum Einsatz kommt; genauso sind beispielsweise Bolzenkäfige möglich.

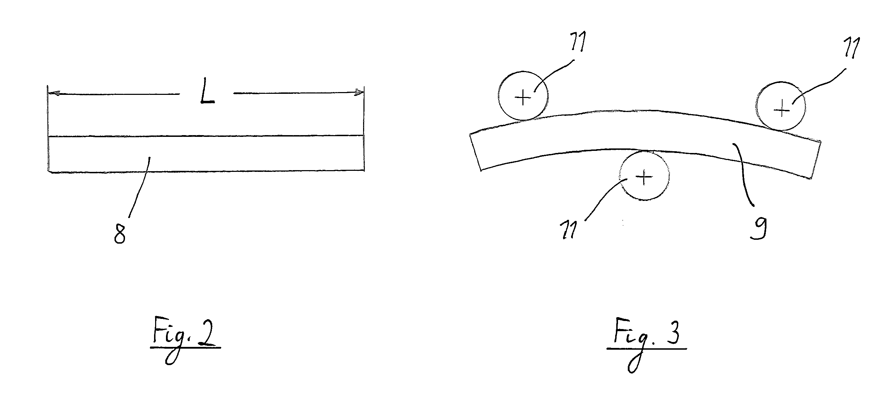

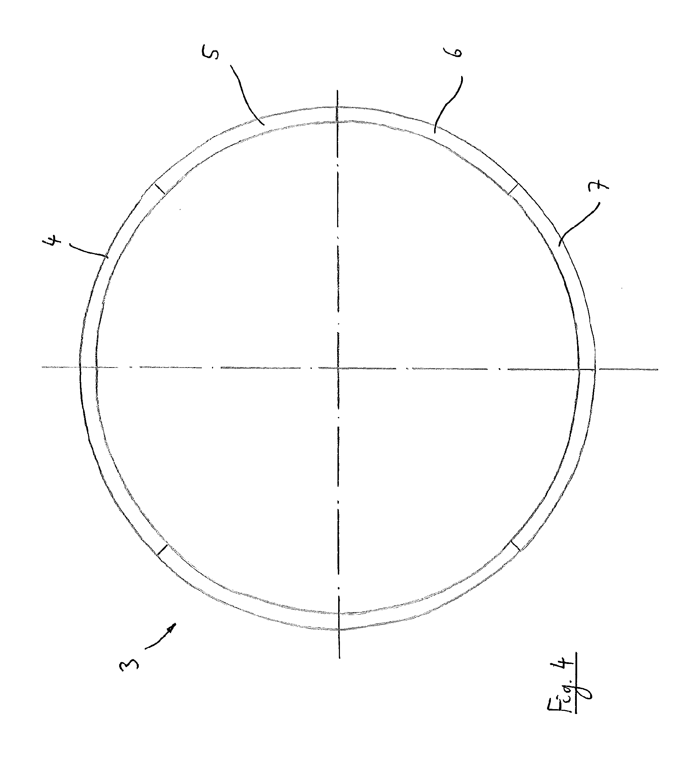

Die vorgesehene Herstellweise der Ringe 3 des Wälzlagerkäfigs 1 geht aus den Figuren 2 bis 4 hervor.

Zunächst wird - gemäß Fig. 2 - aus einem Metallprofil, bevorzugt aus einem Bandstahl, ein Abschnitt eines geraden Metallmaterials 8 abgelängt. Das Ablängmaß ist mit L angegeben.

Wie aus Fig. 3 ersichtlich ist, wird das gerade Metallmaterial 8 gebogen, so dass ein Bogenabschnitt 9 entsteht. Angedeutet sind Rollen 11 einer Biegemaschine, die dem Bogenabschnitt 9 eine gewünschte Krümmung verleihen.

Dann werden die so hergestellten Bogenabschnitte 9 zusammengesetzt, d. h. mehrere Teile 4, 5, 6, 7, die jeweils einen Bogenabschnitt 9 bilden, werden zusammengesetzt und dann verschweißt. Es entsteht ein Ring 3 mit einem großen Durchmesser, wobei sowohl die benötigten Ausgangsteile einfach und kostengünstig herstellbar sind als auch das Erreichen großer Außendurchmesser des Rings 3 problemlos und kostengünstig möglich ist.

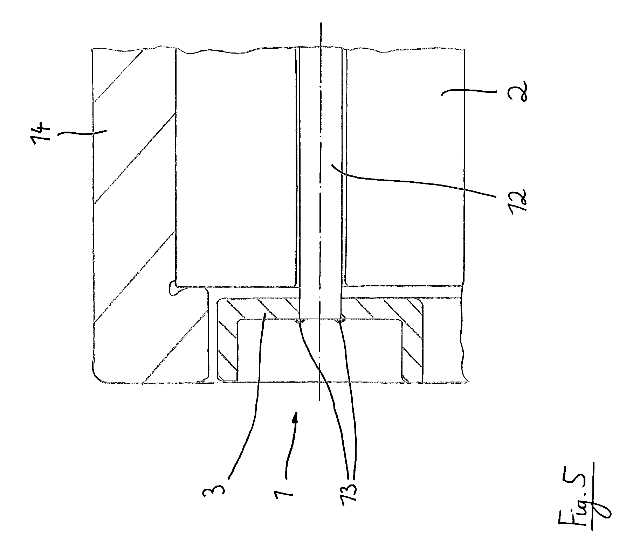

In Fig. 5 ist eine Variante des vorgeschlagenen Käfigs 1 zu sehen. Hier ist ein Teil eines Zylinderrollenlagers dargestellt, wobei der Außenring 14 und der Wälzkörper 2 zu erkennen ist. Der Käfig 1 ist hier als Bolzenkäfig ausgebildet, d. h. die Seitenringe 3 des Käfigs sind über Bolzen 12 miteinander verbunden, die eine zentrische Bohrung im Wälzkörper 2 durchsetzen. Die Bolzen 12 sind über Verschweißungen 13 (oder alternativ auch über Schraub- oder Nietverbindungen) mit den Seitenringen 3 verbunden.

Bei dem bevorzugten Ausführungsbeispiel nach Fig. 5 ist vorgesehen, dass die Seitenringe 3, die sich beiderseits der Wälzkörper 2 befinden, im Radialschnitt U-förmig ausgebildet sind, wobei die offene Seite des "U" vorzugsweise nach außen weist. Hierdurch erhält der Seitenring 3 ein hohes Maß an Steifigkeit; dennoch kann auch ein Seitenring 3 mit großer Abmessung, vorzugsweise über 1.000 mm Durchmesser, erfindungsgemäß leicht gefertigt werden. Gleichzeitig ist der Seitenring 3 relativ leicht.

Erwähnenswert bei der Ausführungsform gemäß Fig. 5 ist der Umstand, dass das Ausgangsmaterial 8 für die Seitenringe 3 hier U-Profile sind (genauso sind natürlich auch andere Profile möglich). Das U-Profil ist dabei nach außen gerichtet an der Stirnseite offen.

### Bezugszeichenliste

- 1: Wälzlagerkäfig
- 2: Wälzkörper
- 3: Ring
- 4: Teil des Rings
- 5: Teil des Rings
- 6: Teil des Rings
- 7: Teil des Rings
- 8: gerades Metallmaterial
- 9: Bogenabschnitt
- 10: Steg
- 11: Rolle
- 12: Bolzen
- 13: Verschweißung
- 14: Außenring

- L: Ablängmaß

## Patentansprüche

1. Verfahren zur Herstellung eines Wälzlagerkäfigs (1) zur Führung und/oder Halterung von Wälzkörpern (2) des Wälzlagers, wobei der Wälzlagerkäfig (1) mindestens einen Ring (3) aufweist,
**dadurch gekennzeichnet, dass**
das Verfahren die Herstellung des Rings (3) mit den folgenden Schritten umfasst:
a) Ablängen mindestens zweier Teile (4, 5, 6, 7) eines geraden profilierten Metallmaterials (8) auf ein definiertes Maß (L);
b) Biegen der Teile (4, 5, 6, 7), so dass sie einen Bogenabschnitt (9) des Rings (3) bilden;
c) stoffschlüssiges Verbinden der Teile (4, 5, 6, 7), so dass diese den Ring (3) bilden.

2. Verfahren nach Anspruch 1, **dadurch gekennzeichnet, dass** als gerades profiliertes Metallmaterial (8) ein Flachstahl oder ein U-Profil verwendet wird.

3. Verfahren nach Anspruch 1 oder 2, **dadurch gekennzeichnet, dass** das Biegen gemäß Schritt b) von Anspruch 1 erfolgt, nachdem die Teile (4, 5, 6, 7) erwärmt worden sind.

4. Verfahren nach Anspruch 1 oder 2, **dadurch gekennzeichnet, dass** das Biegen gemäß Schritt b) von Anspruch 1 in kaltem Zustand der Teile (4, 5, 6, 7) erfolgt.

5. Verfahren nach einem der Ansprüche 1 bis 4, **dadurch gekennzeichnet, dass** das stoffschlüssige Verbinden der Teile (4, 5, 6, 7) durch Schweißen erfolgt.

6. Verfahren nach Anspruch 5, **dadurch gekennzeichnet, dass** das Schweißen ein Widerstandsstumpfschweißen ist.

7. Verfahren nach einem der Ansprüche 1 bis 6, **dadurch gekennzeichnet, dass** mindestens vier Teile (4, 5, 6, 7) zu einem Ring (3) zusammengesetzt werden.

8. Verfahren nach Anspruch 7, **dadurch gekennzeichnet, dass** mindestens sechs Teile (4, 5, 6, 7) zu einem Ring (3) zusammengesetzt werden.

9. Verfahren nach einem der Ansprüche 1 bis 8, **dadurch gekennzeichnet, dass** ein Ring (3) mit einem Außendurchmesser von mindestens 1.000 mm hergestellt wird.

10. Verfahren nach Anspruch 9, **dadurch gekennzeichnet, dass** ein Ring (3) mit einem Außendurchmesser von mindestens 2.500 mm hergestellt wird.

11. Verfahren nach einem der Ansprüche 1 bis 10, **dadurch gekennzeichnet, dass** zwei Ringe (3) mit einer Anzahl Bolzen (12) zu einem Bolzenkäfig verbunden werden.

12. Verfahren nach Anspruch 11, **dadurch gekennzeichnet, dass** die Ringe (3) im Radialschnitt U-förmig ausgebildet sind, wobei die offene Seite des "U" vorzugsweise seitlich nach außen weist.

13. Verfahren nach Anspruch 11 oder 12, **dadurch gekennzeichnet, dass** die Bolzen (12) mit den Ringen (3) über eine stoffschlüssige Verbindung, insbesondere über eine Schweißverbindung, verbunden sind.

14. Verfahren nach Anspruch 11 oder 12, **dadurch gekennzeichnet, dass** die Bolzen (12) mit den Ringen (3) über eine Schraub- oder Nietverbildung verbunden sind.
